Europäisches Patentamt

European Patent Office

Office européen des brevets

(11) Veröffentlichungsnummer : **0 127 759
B1**

⑫ . **EUROPÄISCHE PATENTSCHRIFT**

(45) Veröffentlichungstag der Patentschrift :
21.01.87

(21) Anmeldenummer : 84104659.2

(22) Anmeldetag : 25.04.84

(51) Int. Cl.⁴ : **B 60 T 11/04**

(54) **Bremsseilzugbefestigung.**

(30) Priorität : 03.05.83 DE 8313082 U
05.08.83 DE 3328356

(43) Veröffentlichungstag der Anmeldung :
**12.12.84 Patentblatt 84/50**

(45) Bekanntmachung des Hinweises auf die Patenterteilung : 21.01.87 Patentblatt 87/04

(84) Benannte Vertragsstaaten :
**DE FR GB IT**

(56) Entgegenhaltungen :
DE-C- 2 410 026
GB-A- 1 251 317

(73) Patentinhaber : **Maschinenbau Knott Eggstätt Ing.
Valentin Knott**

**D-8201 Eggstätt (DE)**

(72) Erfinder : **Knott, Valentin jun.
Obinger Strasse 15
D-8201 Eggstätt (DE)**
Erfinder : **Pelzl, Ernst**

**D-8207 Hemhof 79 (DE)**

(74) Vertreter : **Flach, Dieter Rolf Paul, Dipl.-Phys. et al
Patentanwälte Andrae/Flach/Haug/Kneissl Prinzregentenstrasse 24
D-8200 Rosenheim (DE)**

## Beschreibung

Die Erfindung betrifft eine Bremsseilzugbefestigung nach dem Oberbegriff des Anspruches 1 gemäß der DE-C-2 410 026.

Bei der aus der DE-C-24 10 026 bekannten Ausführungsform besteht die Bremsseilzugbefestigung aus einem starren Abdeckkörper, der lösbar in einer im Bremsschild angeordneten Durchtrittsöffnung festgehalten ist. Durch diese Durchtrittsöffnung ragt eine Zugöse einer Bremsbackenspreizvorrichtung hindurch, in der wiederum ein Bremsseil lösbar eingehängt ist. Das Bremsseil ist außerhalb des Abdeckkörpers in einer Hülle gelagert, die sich an der dem Bremsschild abgewandten Stirnseite des Abdeckkörpers abstützt. Um sicherzustellen, daß der Abdeckkörper einfach herstell- und montierbar ist und darüber hinaus das Bremsseil auch nachträglich jederzeit rasch ein- und ausgebaut werden kann, ist ferner vorgesehen, daß der Abdeckkörper aus zwei Schalen besteht, die sich gegenseitig stützen und die am einen Ende mit nach außen abgebogenen Lappen versehen sind, die die Durchtrittsöffnung in dem Bremsschild hintergreifen und die am anderen Ende durch eine Muffel zusammengehalten sind. Als nachteilhaft erweist sich hierbei, daß ein exakter Sitz der Halbschalen nur schwer gewährleistet werden kann, wozu nämlich hinreichend große aufeinander einwirkende Abstützkräfte der Halbschalen notwendig sind. Dadurch läßt sich aber weiterhin der nachträgliche Einbau nicht im ausreichenden gewünschten Maße leichtgängig und sicher ermöglichen. Da zudem die Halbschalen nur durch die die Durchtrittsöffnung hintergreifenden Lappen gehalten werden, kann die Sicherheit nicht immer als ausreichend bezeichnet werden, da die Anordnung auch wackeln und klappern kann.

Bei einer weiteren aus der GB-A-12 51 317 bekannten Ausführungsform der Bremsseilzugbefestigung wird als Abdeckkörper eine napfförmige Hülse verwendet, die auf einer Trägerplatte eingeschraubt ist. Der Ein- und Ausbau eines Bremsseiles ist aber hierbei noch weit aufwendiger, so daß der Gebrauchszweck noch weiter vermindert ist.

Der Erfindung liegt daher die Aufgabe zugrunde, eine Bremsseilzugbefestigung zu schaffen, die trotz einer einfachen und schnellen nachträglichen Befestigung des Bremsseiles vor allem ein Höchstmaß an Sicherheit, insbesondere hinsichtlich der Befestigung des Abdeckkörpers an dem Bremsschild gewährleistet, ohne daß dadurch der Bauraum vergrößert wird.

Die Aufgabe wird erfindungsgemäß entsprechend den in den kennzeichnenden Teilen der Ansprüche 1 oder 3 angegebenen Merkmalen gelöst. Vorteilhafte Ausgestaltungen der Erfindung sind in den Unteransprüchen angegeben.

Durch die vorliegende Erfindung wird eine äußerst einfach handhabbare Bremsseilzugbefestigung geschaffen, die es ermöglicht, daß ein Bremsseil jederzeit äußerst leicht ein- und ausgebaut werden kann und dies bei maximaler Sicherheit und Stabilität. Dazu ist vorgesehen, daß die eine Halbschale am Bremsschild verschweißt ist. Die zweite Halbschale wird dann an der ersten verschweißten an ihrer einen Seite durch Vorsprünge, die in die Durchtrittsöffnung im Bremsschild hineinragen und an der anderen Seite durch einen Klemmhalbring gehalten, der die zwei in Halbkreiszylinder auslaufenden Halbschalen zumindest mittelbar umgreift und dadurch gegen axiales Verschieben sichert. Dazu ist der Klemmhalbring über einen drehbaren Federarm an der verschweißten Halbschale befestigt.

In einer vorteilhaften Weiterbildung nach Anspruch 2 ist vorgesehen, daß der Klemmhalbring eine Hülse festklemmend umschließt, die auf die beiden in Halbkreiszylinder auslaufenden Halbschalen aufgesteckt ist, wobei in einer vorteilhaften Ausgestaltung nach Anspruch 3 ferner vorgesehen ist, daß der Klemmhalbring die Hülse an einem verjüngenden Abschnitt übergreift, so daß ein axiales Auswärtsverschwenken der Hülse mit maximaler Sicherheit unterbunden ist.

In einer alternativen Ausführungsform gemäß Anspruch 3 wird eine Sicherung gegen axiales Verschieben der lösbaren Halbschale dadurch realisiert, daß jeweils an einer Halbschale zumindest ein Vorsprung vorgesehen ist, der in einer entsprechenden Ausnehmung in der anderen Halbschale formschlüssig sitzt. Dadurch, daß am oberen Ende die Halbschalen an deren Halbkreiszylinder durch eine aufgesetzte Hülse zusammengehalten werden, ist die lösbare Halbschale unverrückbar an der angeschweißten Halbschale verankert.

In einer besonders bevorzugten Ausführungsform nach den Ansprüchen 4 und 5 sind die Vorsprünge und die Ausnehmungen an den Halbschalen jeweils an den aneinander liegenden Flanschen quer zur Flanschebene eingebracht, wobei gemäß Anspruch 5 die so eingebrachten Vertiefungen in gleicher axialer Höhe an beiden seitlichen Flanschen einer jeden Halbschale im Gegensinn eingebracht sind, so daß die beiden Halbschalen in ihrer Form identisch sind, wodurch sich die Herstellung vereinfacht.

In einer vorteilhaften Ausgestaltung der Erfindung im Sinne der Aufgabenstellung nach Anspruch 8 ist ferner vorgesehen, daß der Außendurchmesser der Zugöse kleiner ist als der Innendurchmesser der beiden Halbkreiszylinder bzw. der daraufsitzenden Hülse. Dadurch wird bei hoher Sicherheit und Stabilität gleichzeitig noch eine Verringerung der Baugröße der Befestigungseinrichtung erzielt, da die axiale Verstellänge für das Bremsseil mit der daran befestigten Zugöse nicht vermindert wird.

Die hohe Sicherheit und Stabilität der Vorrichtung bei gleichzeitig leichter Handhabung des nachträglichen Ein- und Ausbaues des Bremsseiles wird durch die Befestigungsmöglichkeit über eine Gewindeverbindung gemäß Anspruch 9 noch verbessert, ohne daß dies gemäß Anspruch 10 zu einer Verkürzung der Verstellänge für das Bremsseil führt.

In einer alternativen Ausführungsform nach Anspruch 11 wird das Bremsseil über zwei im Abstand zueinander dort befestigte Haltekugeln an der Zugöse sicher befestigt. Die obere zweite Haltekugel des Bremsseiles liegt dabei zumindest fast spielfrei an der Stirnseite der Zugöse an, so daß hier mit zusätzlicher Sicherheit verhindert wird, daß die untere Haltekugel durch die schräg nach unten verlaufende Einführöffnung im eingebauten Zustand entweichen kann.

In einer besonders bevorzugten Ausführungsform nach Anspruch 12 ist ferner vorgesehen, daß auch die obere zweite Haltekugel in einem oberen Verlängerungsteil der Zugöse über einen seitlichen Einführkanal sicher gehalten wird. Hierdurch wird ferner der Vorteil erzielt, daß beim Lösen der unteren Haltekugel das Bremsseil noch durch die zweite Haltekugel an der Zugöse funktionssicher festgehalten wird.

Weitere Vorteile, Einzelheiten und Merkmale der Erfindung ergeben sich nachfolgend aus dem anhand von Zeichnungen dargestellten Ausführungsbeispielen. Dabei zeigen im einzelnen :

Figur 1 eine Schnittdarstellung in Axialrichtung durch einen Teil einer Backenbremse mit der Bremsseilzugbefestigung ;

Figur 2 eine Seitenansicht des Abdeckkörpers mit hintenliegendem Federarm und Klemmhalbring ;

Figur 3 eine Seitenansicht des Abdeckkörpers in teilweise geschnittener Darstellung ;

Figur 4 eine Schnittdarstellung in Axialrichtung durch die eine, am Bremsschild festverschweißte Halbschale in entgegengesetzter Darstellung zu Figur 1 ;

Figur 5 eine Schnittdarstellung in Axialrichtung gemäß einem zweiten Ausführungsbeispiel ;

Figur 6 eine Seitenansicht der Bremsseilzugbefestigung gemäß Figur 5 bei entfernter lösbarer Halbschale ;

Figur 7 eine Seitenansicht der Bremsseilzugbefestigung gemäß Figur 5 ;

Figur 8 abgewandelte Zugöse gemäß Figur 6.

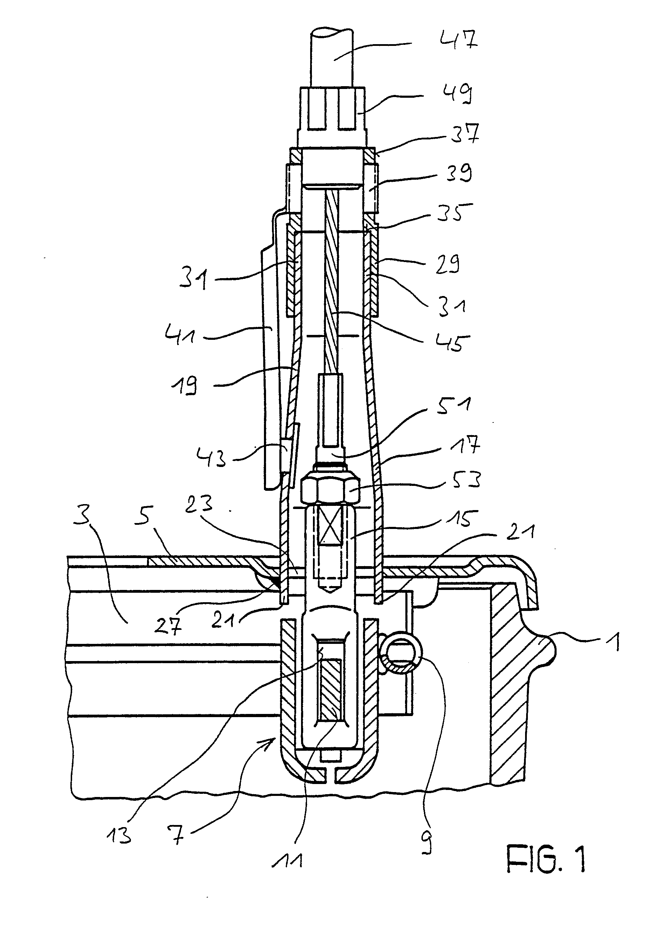

In Figur 1 ist in Schnittdarstellung in Axialrichtung durch eine Innenbackenbremse eine Bremsnabe 1 mit innenliegenden Bremsbacken 3 und einem stirnseitigen Bremsschild 5 gezeigt. In bekannter Weise können dabei die Bremsbacken 3 durch ein Spreizschloß 7, das in Figur 1 nur teilweise dargestellt ist, auseinander gedrückt werden. Mittels einer Zugfeder 9 wird bei gelöstem Spreizschloß die Rückführung der Bremsbacken bewerkstelligt.

Das Spreizschloß 7 umfaßt dabei u. a. einen Spreizhebel 11, der in einer unteren Einhängöffnung 13 einer Zugöse 15 eingehängt ist. In bekannter Weise wird dabei bei der Montage des Spreizschlosses 7 in die Bremse zunächst der Spreizhebel 11 in die Einhängöffnung 13 der Zugöse 15 eingehängt.

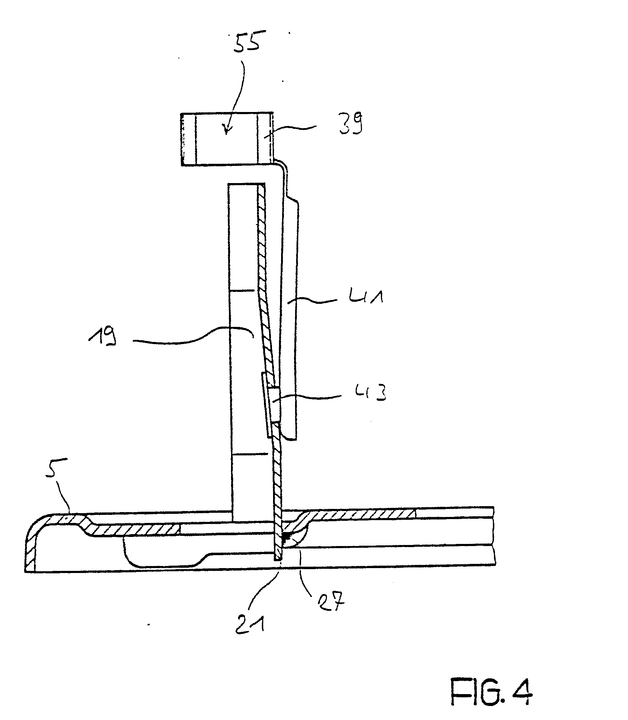

Der Abdeckkörper besteht aus zwei Halbschalen 17 und 19. Wie insbesondere aus Figur 1 und Figur 4 zu ersehen ist, weist jede Halbschale 17 und 19 einen unteren Vorsprung 21 auf, mit dem die Halbschale in eine Durchtrittsöffnung 23 maximal bis zu einem Anschlag der überstehenden Randbereiche 25 auf dem Bremsschild 5 aufsitzt. Die Vorsprünge 21 erstrecken sich im gezeigten Ausführungsbeispiel in unmittelbarer gerader Verlängerung der Seitenwandung einer jeden Halbschale 17. Die eine Halbschale 19 ist dabei mit dem Bremsschild 5 verschweißt, wobei die Verschweißnaht 27 im gezeigten Ausführungsbeispiel auf der Unterseite des Bremsschildes 5 verläuft. Bremsschild 5 und Halbschale 19 bilden somit eine feste einstückige Verbindung. Die andere Halbschale 17 ist demgegenüber in der Durchtrittsöffnung 23 lösbar und leichtgängig eingesteckt und wird an ihrem von dem Bremsschild 5 ab liegenden Ende mittels einer Hülse 29 an der verschweißten Halbschale 19 gehalten. Dazu laufen die beiden Halbschalen 17 und 19 an ihrem außenliegenden Ende in zwei Halbkreiszylinder 31 aus, die sich unmittelbar oberhalb einer Schulter 33 der Halbschalen 17 und 19 anschließen. Die Hülse 29, die über die Halbkreiszylinder 31 bis zu einem inneren Anschlag 35 aufgesteckt ist, weist selbst einen außenliegenden verjüngenden Abschnitt 37 auf, über den ein Klemmhalbring 39 gesteckt ist.

Wie sich insbesondere aus Figur 1, Figur 2 und Figur 4 ergibt, ist der Klemmhalbring 39 am Ende eines verschwenkbaren Federarmes 41 ausgebildet, der um eine Niete 43 an der verschweißten Halbschale 19 drehbar befestigt ist. Bei entsprechend verschwenktem und aufgestecktem Klemmhalbring über der Hülse 29 ist dadurch die Hülse 29 und schließlich die lösbare Halbschale 17 gegen axiales Verschieben gesichert.

In Figur 1 und 3 ist ferner ein Bowdenzug gezeigt, umfassend einen Bremsseilzug 45, der außerhalb des Abdeckkörpers in einer Hülle 47 geführt ist, an deren Ende eine Abschlußmuffe 49 vorgesehen ist, die sich stirnseitig an der Hülse 29 abstützt. Der Bremsseilzug 45 weist an seinem Ende ein mit ihm festverbundenes Schraubglied 51 auf, das in einem entsprechenden Innengewinde der Zugöse 15 eingeschraubt ist.

Zur Sicherung ist auf dem Schraubglied 51 eine an sich bekannte klemmende, d. h. selbsthemmende Mutter 53 aufgeschraubt, über die eine feste Verankerung des Bremsseilzuges 45 an der Zugöse 15 gewährleistet ist.

Nachfolgend wird auf die Montage bzw. Demontage des Bremsseilzuges eingegangen, die jederzeit schnell und leicht vorgenommen werden kann.

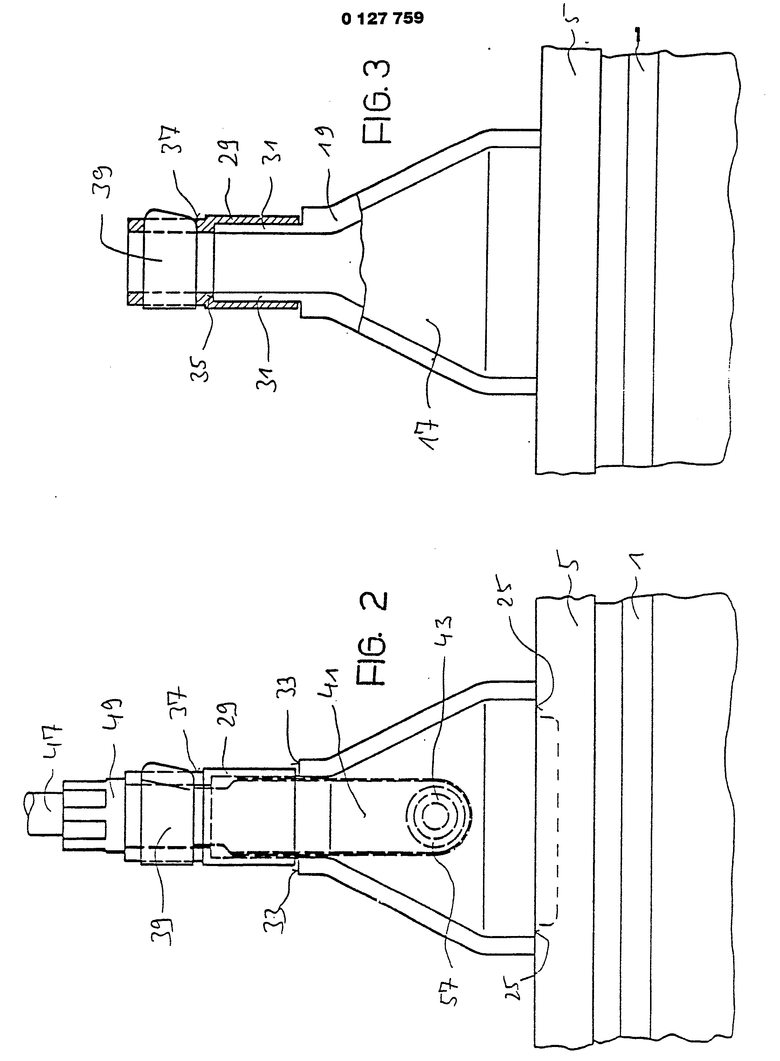

Bei der Montage beispielsweise braucht nur der Bremsseilzug 45 über das erwähnte Schraubglied 51 bei entfernter lösbarer Halbschale 17 verankert werden. Danach wird die lösbare Halbschale 17 mit ihrem unteren Vorsprung 21 in die Durchtrittsöffnung 23 gesteckt und an ihrem gegenüber liegenden Ende durch Aufstecken der Hülse 29 an der verschweißten Halbschale 19 verankert. Zur Sicherung wird dann der Federarm 41 in der Seitendarstellung nach Figur 2 von einer unteren Stellung im Urzeigersinn verschwenkt, bis der Klemmhalbring 39 mit seiner in Figur 4 gezeigten Öffnung 55 über die Hülse 29 aufgeklipst ist, wodurch diese als auch die lösbare Halbschale 17 gegen axiales Entfernen gesichert ist. Die Demontage erfolgt dann in umgekehrter Reihenfolge.

Als weiter günstig erweist sich dabei, daß der Innendurchmesser der Halbkreiszylinder 31 bzw. der Hülse 29 größer ist als der Außendurchmesser des Schraubgliedes 51 bzw. der Mutter 53, so daß der Bremsseilzug 45 auch durch die obere Austrittsöffnung der Halbkreiszylinder 31 hindurchgeschoben werden kann.

Wie aus den Zeichnungen nicht näher hervorgeht, kann zwischen dem Federarm 41 und der Niete 43 noch eine außen auf der Halbschale 19 aufliegende Unterlegscheibe 57 vorgesehen sein.

Ebenso ist denkbar, den Federarm 41 nicht an der verschweißten Halbeschale, sondern an der lösbaren Halbschale 17 zu befestigen, wobei aber die Ausführungsform gemäß dem gezeigten Ausführungsbeispiel wegen der dort erhöhten Sicherheit bevorzugt ist. In einer vereinfachten nicht näher gezeigten Ausführungsform kann die Hülse 29 auch weggelassen werden, so daß der Klemmhalbring 39 die Halbkreiszylinder 31 der Halbschalen 17 und 19 direkt und unmittelbar umfaßt. Ebenso ist auch denkbar, daß die Abschlußmuffe 49 des Bowdenzuges so ausgebildet ist, daß diese unmittelbar über die Halbkreiszylinder 31 aufgesteckt gehalten ist und die beiden Halbschalen 17 und 19 dadurch aneinanderhält, wobei in diesem Falle der Klemmhalbring 39 auf die Abschlußmuffel 49 des Bowdenzuges aufgesteckt wird.

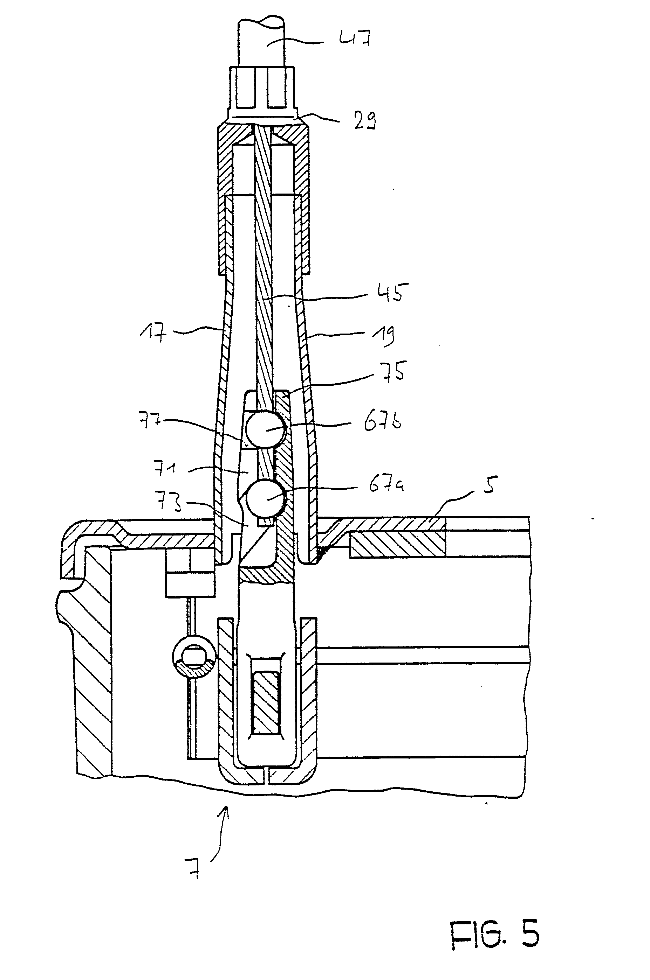

Nachfolgend wird auf die zweite Ausführungsform gemäß den Figuren 5 bis 8 eingegangen, in der ähnliche Teile zum ersten Ausführungsbeispiel mit den gleichen Bezugsziffern benannt sind.

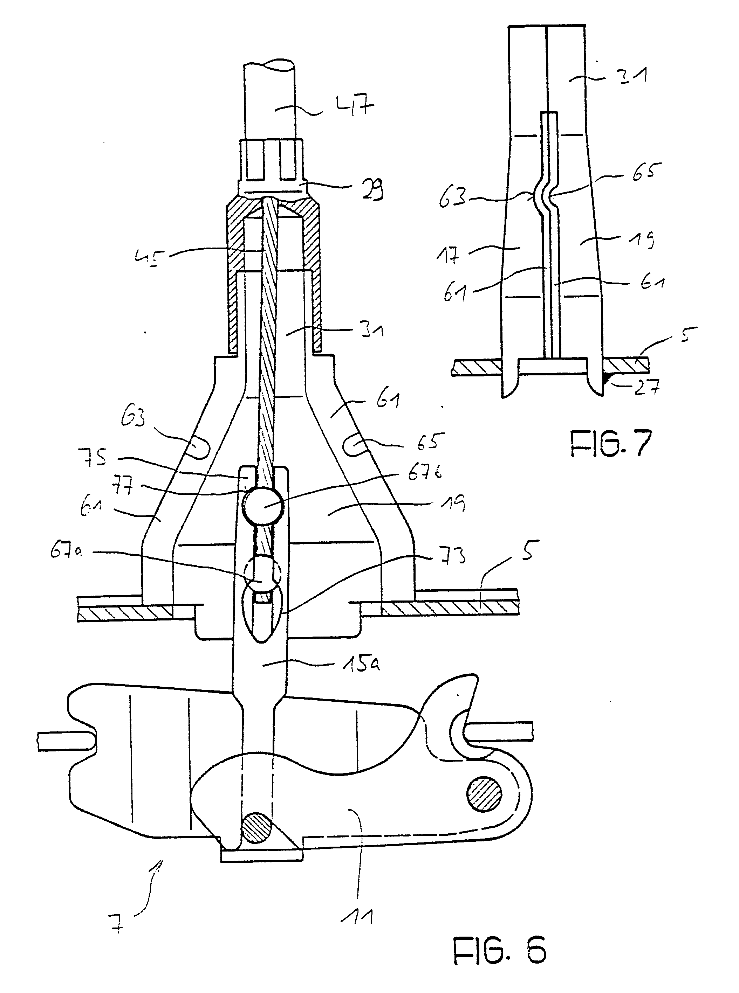

Dieses Ausführungsbeispiel unterscheidet sich zum einen darin, daß an den seitlichen Flanschen 61 an einer jeden Halbschale 17 und 19 quer zur Flanschebene Vertiefungen eingebracht, sind beispielsweise in Form von Kerben, so daß beispielsweise in Figur 6 am linken Flansch 61 ein aus der Zeichenebene herausragender Vorsprung 63 und in gleicher axialer Höhe an dem zweiten Flansch 61 eine entsprechend in die Zeichenebene hineinragende Ausnehmung 65 gebildet ist.

Die in Form von Vertiefungen oder Kerben gebildeten Vorsprünge 63 und Ausnehmungen 65 werden in beiden Halbschalen identisch eingebracht, so daß — wie sich insbesondere aus der Seitenansicht gemäß Figur 7 ergibt — jeweils der eine Vorsprung 63 der einen Halbschale 19 in die identisch ausgebildete Ausnehmung 65 der zweiten Halbschale 17 eingreift. Da am oberen Ende der Halbschalen eine Hülse 29 auf den Halbkreiszylindern 31 übergestülpt ist, ist die lösbare Halbschale 17 gegen axiales Herausnehmen gesichert. Durch die beispielsweise durch Kerben eingebrachten Vertiefungen in den Flanschen wird somit auf einfache Weise eine axiale Sicherung geschaffen. Natürlich können entsprechende Vorsprünge und Ausnehmungen auch an anderer Stelle, beispielsweise unter Weglassung von Flanschen an den beiden zugehörigen Halbschalen 17 und 19 vorgesehen sein.

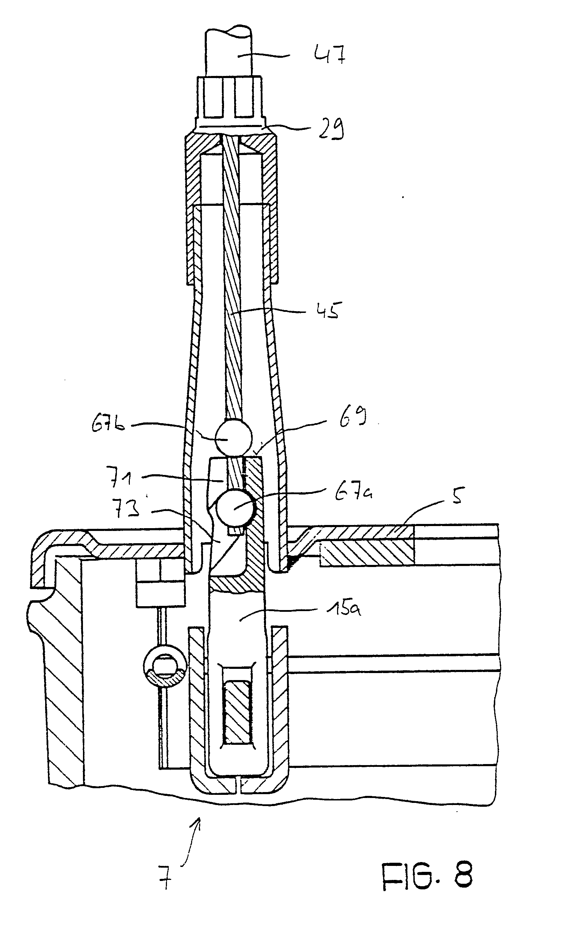

Wie sich insbesondere aus der Figur 8 ferner ergibt, wird das Bremsseil 45 an der Zugöse 15a über zwei Haltekugeln 67a und 67b befestigt. Die Zugöse 15a weist dabei einen bis zur oberen Stirnseite 69 verlaufenden Einführungsschlitz 71 für das Bremsseil 45 und eine schräg nach unten verlaufende Einführöffnung 73 für die untere Haltekugel 67a auf. Die Montage des Bremsseilzuges erfolgt hierbei ähnlich wie in Figur 1, wobei bei entfernter lösbarer Halbschale 17 die untere Haltekugel 67a in ihren entsprechenden Sitz über dem Einführschlitz 71 in der Zugöse 15a verankert und danach das Bremsseil 45 in seine Betriebsstellung verschwenkt wird, so daß die zweite Haltekugel 67b unmittelbar im Bereich der oberen Stirnseite 69 anliegt. Im vorliegenden Ausführungsbeispiel kann sowohl der Ein- als auch der Ausbau des Bremsseilzuges ohne Werkzeuge vorgenommen werden.

Dadurch wird ferner sichergestellt, daß selbst in extremen Betriebssituationen oder bei wegfallender Zugbeanspruchung die untere Haltekugel 67a nicht aus der Einführöffnung 73 herausrutschen kann, da der hierfür notwendige Bewegungshub durch die obere Haltekugel 67b beschränkt ist.

Zur weiteren Sicherheit kann gemäß der Darstellung nach den Figuren 6-7 ferner vorgesehen sein, daß die Zugöse 15a an der oberen Stirnseite 69 gemäß Fig. 8 ein einteilig mit ihr ausgebildetes Verlängerungsteil 75 aufweist, wobei die obere Haltekugel 67b über eine radiale Einführöffnung 77 in die in der Zeichnung dargestellte Betriebslage einführbar ist. Hierdurch wird ferner noch weiter sichergestellt, daß beim möglicherweise fehlerhaften Lösen der unteren Haltekugel 67a vom Bremsseilzug 45 die Abstützfunktion zusätzlich über die Haltekugel 67b übernommen werden kann.

Da auch bei diesem Ausführungsbeispiel der Außendurchmesser der Zugöse 15a geringer ist als der Innendurchmesser der Halbschalen bzw. der Halbkreiszylinder 31, steht auch hier bei minimaler Baugröße ein maximaler Verstellweg für den Bremsseilzug zur Verfügung.

Ferner ist in den gezeigten Ausführungsbeispielen auch die ververschweißte Halbschale 17 mit einem durch die Durchtrittsöffnung 23 hindurchragenden Vorsprung 21 versehen und an der Unterseite verschweißt. Ebenso möglich ist aber auch, daß diese fest verankerte Halbschale beispielsweise keinen Vorsprung 21 aufweist und unmittelbar an der Durchtrittsöffnung oder auf dem Bremsschild 5 außen verschweit ist.

In besonderen Einsatzfällen kann anstelle des Bowdenzuges auch ein festes Zuggestänge verwendet werden.

**Patentansprüche**

1. Bremsseilzugbefestigung, insbesondere für Innenbackenbremsen wie Simplexbremsen für Fahrzeuge, mit einem Bremsschild (5), einem aus zwei Halbschalen (17 ; 19) bestehenden starren Abdeckkörper, der an einer Durchtrittsöffnung (23) im Bremsschild (5) sitzt und dazu zumindest die eine Halbschale (17 bzw. 19) mit einem Vorsprung (21) versehen ist, der in die Durchtrittsöffnung (23) hineinragt, durch die eine Zugöse (15 ; 15a) einer Bremsbackenspreizvorrichtung hindurchragt und mit einem Bremsseilzug (45), der hieran wiederum lösbar befestigt und außerhalb des Abdeckkörpers in einer Hülle (47) gelagert ist, die sich an der dem Bremsschild (5) abgewandten Seite abstützt, wobei die Halbschalen (17 ; 19) an dieser Seite des Abdeckgehäuses in zwei Halbkreiszylinder (31) auslaufen und hier zur Verhinderung eines seitlichen Auseinanderklappens gehalten sind, dadurch gekennzeichnet, daß die andere Halbschale (19) auf dem Bremsschild (5) fest verschweißt ist und daß an der Außenseite vorzugsweise der verschweißten Halbschale (19) ein Federarm (41) drehbar gelagert ist, an dessen Ende ein Klemmhalbring (39) die Halbkreiszylinder (31) zumindest mittelbar umschließt.

2. Bremsseilzugbefestigung nach Anspruch 1, mit einer auf die Halbkreiszylinder aufgesteckten Hülse, dadurch gekennzeichnet, daß der Klemmhalbring (39) die Hülse (29 ; 49) festklemmend umschließt.

3. Bremsseilzugbefestigung nach dem Oberbegriff des Anspruches 1, dadurch gekennzeichnet, daß an der einen Halbschale (17 ; 19) zumindest eine Ausnehmung (65) eingebracht ist, in die ein entsprechender an der anderen Halbschale (19 bzw. 17) vorgesehener Vorsprung (63) formschlüssig eingreift, und dass eine der beiden Halbschalen (17 bzw. 19) auf dem Bremsschild (5) fest verschweisst ist.

4. Bremsseilzugbefestigung nach Anspruch 3, wobei die beiden Halbschalen jeweils mit zwei seitlichen, radial wegstehenden und aneinander liegenden Flanschen versehen sind, dadurch gekennzeichnet, daß beide aneinander liegenden Flansche (61) der beiden Halbschalen (17 ; 19) zumindest jeweils mit einer quer zur Ebene der Flansche (61) gleichgerichteten Vertiefung (Vorsprung 63 ; Ausnehmung 65) versehen sind, so daß der so gebildete Vorsprung (63) am Flansch (61) der einen Halbschale (17 ; 19) in eine so entsprechend gebildete Ausnehmung (65) am anliegenden Flansch (61) der anderen Halbschale (19 bzw. 17) eingreift.

5. Bremsseilzugbefestigung nach Anspruch 3 oder 4, dadurch gekennzeichnet, daß an jeder Halbschale (17 ; 19) an deren beiden seitlichen Flanschen (61) in gleicher axialer Höhe jeweils zumindest eine Vertiefung (Vorsprung 63 ; Ausnehmung 65) in entgegengesetzter Richtung zueinander eingebracht sind.

6. Bremsseilzugbefestigung nach Anspruch 1 oder 2, wobei die Hülse einen verjüngenden außenliegenden Abschnitt aufweist, dadurch gekennzeichnet, daß der Klemmhalbring (39) die Hülse (29 ; 49) an diesen verjüngendem Abschnitt (37) festklemmend hält.

7. Bremsseilzugbefestigung nach einem der Ansprüche 1 bis 6, dadurch gekennzeichnet, daß sich an dem von den Halbschalen (17 ; 19) abgewandten Ende der Hülse (29) eine daran anschließende Abschlußmuffe (49) einer Hülle (47) des Bremsseilzuges (45) anschließt.

8. Bremsseilzugbefestigung nach einem der Ansprüche 1 bis 7, dadurch gekennzeichnet, daß der Außendurchmesser der Zugöse (15 ; 15a) kleiner ist als der Innendurchmesser der beiden Halbkreiszylinder (31) bzw. der darauf sitzenden Hülse (29).

9. Bremsseilzugbefestigung nach einem der Ansprüche 1 bis 5, dadurch gekennzeichnet, daß die Zugöse (15) auf der den Halbschalen (17 ; 19) zugewandten äußeren Stirnseite mit einem Innengewinde versehen ist, in das ein am Bremsseilzug (45) befestigtes Schraubglied (51) fest eingeschraubt ist.

10. Bremsseilzugbefestigung nach Anspruch 9, dadurch gekennzeichnet, daß auf dem Schraubglied (51) eine klemmende Mutter (53) sitzt, deren Außendurchmesser kleiner ist als der Innendurchmesser der beiden Halbkreiszylinder (31) bzw. der darauf sitzenden Hülse (29).

11. Bremsseilzugbefestigung nach einem der Ansprüche 1 bis 8, dadurch gekennzeichnet, daß am Bremsseilzug (45) an seinem unteren Ende zwei im Abstand zueinander angeordnete Haltekugeln (67a ; 67b) befestigt sind, wobei die untere Halbkugel (67a) in einer schräg nach unten verlaufenden Einführöffnung (73) und die obere Haltekugel (67b) an der Stirnseite (69) der Halteöse (15a) zumindest fast spielfrei angeordnet ist.

12. Bremsseilzugbefestigung nach einem der Ansprüche 1 bis 8 oder 11, dadurch gekennzeichnet, daß die Zugöse (15a) an der oberen Stirnseite (69) ein die obere Haltekugel (67b) über eine radiale Einführöffnung (77) aufnehmendes Verlängerungsteil (75) zur weiteren Abstützung des Bremsseilzuges (45) an der Zugöse (15a) angeordnet ist.

13. Bremsseilzugbefestigung nach einem der Ansprüche 1, 2 oder 6 bis 12, dadurch gekennzeichnet, daß der Federarm (41) über eine Niete (43) an der Halbschale (19) drehbar befestigt ist.

14. Bremsseilzugbefestigung nach Anspruch 13, dadurch gekennzeichnet, daß zwischen dem außenliegenden Nietrand und dem Federarm (41) eine Unterlegscheibe (57) angeordnet ist.

**Claims**

1. A brake cable attachment, more particularly for internal jaw brakes such as simplex brakes for vehicles, with a brake support plate (5), a rigid cover member consisting of two half shells (17 and 19), and which is seated on a passage port (23) in the brake support plate (5) and for this purpose at least one of the half shells (17 or 19, respectively) is provided with a projection (21), which extends into the passage port (23) (though which the one eyed cable connector (15 and 15a) of a brake jaw spreading means extends) and with a brake cable (45), which is as well detachably secured to this and is supported outside the cover member in a bowden casing (47), which bowden casing bears on the end remote from the brake support plate (5), the half shells (17 and 19) merging in an outward direction on this side of the cover housing with two semi-cylinders (31) where they are held in order to prevent lateral outward rocking away from each other, characterized in that the other half shell (19) is fixedly welded to the brake support plate (5), in that a spring arm (41) is pivotally mounted on the outer side of, preferably, the welded half shell (19), and on the end of the said arm (41) a clamping half ring (39) is at least indirectly placed around the semi-cylinders (31).

2. The brake cable attachment as claimed in claim 1 with a sleeve that is placed around the semi-cylinder, characterized in that the half clamping ring (39) is placed around the sleeve (29 and 49) to fixedly grip it.

3. The brake cable attachment as claimed in the preamble of claim 1, characterized in that the one half shell (17 and 19) has at least one recess (65) in it, into which there lockingly extends a corresponding projection (63) provided on the other half shell (19 or 17, respectively) and in that one of the two half shells (17 and 19, respectively) is rigidly welded on the brake support plate (5).

4. The brake cable attachment as claimed in claim 3 in which the two half shells are each provided with two lateral radially projecting flanges bearing against each other, characterized in that the two flanges (61) resting against each other of the two half shells (17 and 19) are at least respectively provided with a depression (projection 63 and recess 65) running in the same direction transversely in relation to the plane of the flanges (61) so that the projection (63) so formed on the flange (61) of the one half shell (17 and 19) fits into a correspondingly formed recess (65) on the adjacent flange (61) of the other half shell (19 and 17, respectively).

5. The brake cable attachment as claimed in claim 3 or claim 4, characterized in that on each half shell (17 and 19) on the two lateral flanges (61) thereof at the same axial level there is at least one depression (projection 63 and recess 65) extending in opposite directions to each other.

6. The brake cable attachment as claimed in claim 1 or claim 2 in which the sleeve has a tapering external section, characterized in that the clamping half ring (39) holds the sleeve (29 and 49) firmly in place on this tapering section (37).

7. The brake cable attachment as claimed in any one of claims 1 through 6, characterized in that on the end, remote from the half shells (17 and 19), of the sleeve (29) there an adjoining terminating cap (49) of a bowden casing (47) of the brake cable (45).

8. The brake cable attachment as claimed in any one of the claims 1 through 7, characterized in that the external diameter of the eyed cable connector (15 and 15a) is smaller than the internal diameter of the two semi-cylinders (31) or the sleeve (29) mounted thereon, respectively.

9. The brake cable attachment as claimed in any one of the claims 1 through 5, characterized in that the eyed cable connector (15) is provided with an internal screw thread on the outer end face adjacent to the half shells (17 and 19), and a screw member (51) fixed to the brake cable (45) is firmly screwed into this thread.

10. The brake cable attachment as claimed in claim 9, characterized in that the a locking nut (53) is mounted on the screw member (51) and the external diameter of the nut (53) is smaller than the internal diameter of the two semi-cylinders (31) or, respectively, the sleeve (29) mounted thereon.

11. The brake cable attachment as claimed in any one of the claims 1 through 8, characterized in that two spaced retaining balls (67a and 67b) are attached to the brake cable (45) on its lower end and the lower retaining ball (67a) is arranged in a obliquely downwardly extending entry opening (73) and the upper retaining ball (67b) is arranged on the end face (69) of the eyed connector (15a) with substantially no play.

12. The brake cable attachment as claimed in any one of claims 1 to 8 or 11, characterized in that the eyed cable connector (15a) is arranged on the upper end face (69) of an extension part (75) receiving the upper retaining ball (67b) via a radial entry opening (77) for further support of the brake cable (45) on the eyed connector (15a).

13. The brake cable attachment as claimed in any one of claims 1, 2 or 6 to 12, characterized in that the spring arm (41) is pivotally attached to the half-shell (19) via a rivet (43).

14. The brake cable attachment as claimed in claim 13, characterized in that a washer (57) is arranged on between the outer rivet edge and the spring arm (41).

## Revendications

1. Fixation d'une tirette à câble de frein pour freins à mâchoires intérieures, tels que les freins simplex pour véhicules, comportant un flasque de frein (5), une garniture rigide composée de deux coquilles (17, 19), disposée sur un orifice de passage (23) du flasque de frein (5) et pourvue à cet effet d'au moins une partie en saillie (21) sur une des coquilles (17 ou 19) pénétrant dans l'orifice de passage (23), lequel est traversé par un anneau de traction (15 ; 15a) d'un système d'écartement des mâchoires de frein, ainsi qu'une tirette à câble de frein (45) fixée de manière amovible et dont le câble est logé, extérieurement à ladite garniture, dans une gaine (47), laquelle vient appuyer contre ladite garniture du côté opposé au flasque de frein (5), où les coquilles (17, 19), de ce côté de la garniture, se terminent en forme de deux demi-cylindres circulaires (31) et y sont maintenues ensemble afin d'empêcher qu'elles se séparent l'une de l'autre, caractérisée en ce qu'une des coquilles (19) est soudée au flasque de frein (5) et en ce que du côté extérieur, de préférence de la coquille soudée (19), il est fixé un bras flexible mobile (41) à l'extrémité duquel une demi-bague de fixation (39) s'engage au moins indirectement sur les demi-cylindres circulaires (31).

2. Fixation d'une tirette à câble de frein suivant la revendication 1, comportant une douille glissée sur les demi-cylindres circulaires, caractérisée en ce que la demi-bague de fixation (39) entoure la douille (29 ; 49) de manière à la serrer.

3. Fixation d'une tirette à câble de frein suivant le préambule de la revendication 1, caractérisée en ce qu'une des coquilles (17 ; 19) comporte au moins un évidement (65) dans lequel vient se positionner une partie en saillie (63) de forme correspondante prévue sur l'autre coquille (19 ou 17) et en ce qu'une des deux coquilles (17 ou 19) est soudée au flasque de frein (5).

4. Fixation d'une tirette à câble de frein suivant la revendication 3, où les deux coquilles comportent chacune deux bords latéraux disposés radialement et venant se coller l'un contre l'autre, caractérisée en ce que les deux bords (61) en face l'un de l'autre de chacune des coquilles (17 ; 19) sont pourvue chacun d'au moins une encoche (partie en saillie 63 ; évidement 65) disposée transversalement au plan du bord (61), de sorte que la partie en saillie (63) réalisée sur le bord (61) d'une des coquilles (17 ; 19) vienne se positionner dans un évidement (65) de forme correspondante réalisé dans le bord (61) de l'autre coquille (19 ; 17) qui lui fait face.

5. Fixation d'une tirette à câble de frein suivant la revendication 3 ou 4, caractérisée en ce que chacune des coquilles (17 ; 19) comporte sur ses deux bords latéraux (61) au moins une encoche (partie en saillie 63 ; évidement 65) dans le sens inverse à l'autre et située à la même hauteur axiale que l'encoche qui lui correspond.

6. Fixation d'une tirette à câble de frein suivant la revendication 1 ou 2, où la douille présente un étranglement extérieur, caractérisée en ce que la demi-bague de fixation (39) maintient fermement la douille (29 ; 49) suivant cet étranglement (37).

7. Fixation d'une tirette à câble de frein suivant une des revendications 1 à 6, caractérisée en ce qu'à l'extrémité de la douille (29) opposée aux coquilles (17 ; 19), il y est prévu un manchon de fermeture (49) destiné à connecter une gaine (47) de câble de frein (45).

8. Fixation d'une tirette à câble de frein suivant une des revendications 1 à 7, caractérisée en ce que le diamètre extérieur de l'anneau de traction (15 ; 15a) est plus petit que le diamètre intérieur des deux demi-cylindres circulaires (31) et de la douille (29) qui s'y trouve glissée.

9. Fixation d'une tirette à câble de frein suivant une des revendications 1 à 5, caractérisée en ce que l'anneau de traction (15) comporte, du côté extérieur du flasque de frein (5), un taraudage dans lequel un élément fileté (51) fixé au câble de frein (45) est vissé.

10. Fixation d'une tirette à câble de frein suivant la revendication 9, caractérisée en ce que l'élément fileté (51) comporte un écrou de blocage (53) dont le diamètre extérieur est plus petit que le diamètre intérieur des deux demi-cylindres circulaires (31) et de la douille (29) qui s'y trouve installée.

11. Fixation d'une tirette à câble de frein suivant une des revendications 1 à 8, caractérisée en ce qu'à l'extrémité inférieure de la tirette (45), il est fixé deux billes de retenue (67a ; 67b) à une certaine distance l'une de l'autre, où la bille de retenue inférieure (67a) est disposée dans une ouverture d'introduction (73) disposée obliquement vers le bas et où la bille de retenue supérieure (67b) est disposée au moins pratiquement sans jeu contre l'extrémité (69) de l'anneau de traction (15a).

12. Fixation d'une tirette à câble de frein suivant une des revendications 1 à 8 ou 11, caractérisée en ce que l'anneau de traction (15a) comporte un prolongement (75) à sa partie supérieure (69) destiné à recevoir la bille de retenue supérieure (67b) par l'intermédiaire d'une ouverture radiale (77), de manière à supporter additionnellement la tirette (45) par rapport à l'anneau de traction (15a).

13. Fixation d'une tirette à câble de frein suivant une des revendications 1, 2 ou 6 à 12, caractérisée en ce que le bras flexible (41) est fixé de manière mobile à la coquille (19) au moyen d'un rivet (43).

14. Fixation d'une tirette à câble de frein suivant la revendication 13, caractérisée en ce qu'il est disposé une rondelle (57) entre le bord extérieur du rivet et le bras flexible (41).

FIG. 1

FIG. 2

FIG. 3

0 127 759

FIG. 4

FIG. 5

FIG. 7

FIG. 6

FIG. 8